# EUROPEAN PATENT SPECIFICATION

(11) **EP 3 446 888 B1**
(45) Date of publication and mention of the grant of the patent: **23.06.2021**
(21) Application number: 17785917.0
(22) Date of filing: 14.04.2017
(51) Int. Cl.: B60C 11/03, B60C 11/12, B60C 11/13, B60C 11/11

(54) **TIRE**
REIFEN
PNEU

(30) Priority: 18.04.2016 JP 2016083033; 18.04.2016 JP 2016083035
(43) Date of publication of application: 27.02.2019
(73) Proprietor: Bridgestone Corporation, Tokyo 104-8340 (JP)
(72) Inventor: NAKAMURA, Takamitsu, Tokyo 104-8340 (JP); FUKUNAGA, Takayuki, Tokyo 104-8340 (JP)
(74) Representative: Oxley, Robin John George
(86) International application number: PCT/JP2017/015305
(87) International publication number: WO 2017/183579

(56) References cited:
- JP-A- H0 840 021
- JP-A- H02 310 108
- JP-A- H08 276 709
- JP-A- H08 324 211
- JP-A- 2011 143 897
- JP-A- 2011 143 898
- JP-A- 2013 133 084
- US-A1- 2012 227 883
- US-A1- 2015 273 950

## Description

### [Technical Field]

The present invention relates to a tire having blocks arranged adjacent to each other in a tread surface view, each of the blocks being formed in a polygonal shape.

### [Background Art]

Conventionally, in a winter tire (hereinafter, referred to as a tire) suitable for travelling on ice and snow roads, a tread pattern in which blocks, each of which has a relatively small ground contact area, are densely arranged is adopted (for example, see Patent Literature 1).

Specifically, by adopting a tread pattern in which blocks, each of which is formed in an octagonal shape having a length in each of a tire circumferential direction and a tire width direction of approximately 20 mm or less, are densely arranged in zigzag, ground contact performance of each of the blocks is improved. That is, by adopting a block having a small ground contact area, the ground contact performance of each of the blocks is improved. Further, by adopting a block having a small ground contact area, a distance to a block circumferential edge is made small, and thereby a water screen between a wheel tread of the block and a road surface can be removed quickly.

Especially, performance on ice roads (on-ice performance) is improved by the improvement of the ground contact performance of the block and the removal of the water screen.

Further, especially by adopting a block having a small ground contact area, the ground contact performance of each of the blocks is improved, and as a result, a ground contact length of the tire is made long. With this, braking and driving performance (braking and traction) and cornering performance can be improved. Attention is also drawn to the disclosures of JP2011-143898A, JP2011-143897A, US2012/227883A1, US2015/273950A1, JPH08-40021A, JPH08-324211A, JPH02-310108A and JP2013-133084A.

### [Citation List]

### [Patent Literature]

[PTL 1] International Publication No. WO2010/032606

### [Summary of Invention]

However, the conventional tire described above has the following problems. That is, in a state in which a size of each block is small, the rigidity of one single block is low, and each of braking force or driving force more than a predetermined value is caused, the tire is lifted off the road surface due to falling of the block in the tire circumferential direction. Consequently, the ground contact performance of the block is deteriorated. Accordingly, there is a room for further improvement of the on-ice performance, in particular the braking performance and the acceleration performance.

Further, in a state in which a size of each block is small, the rigidity of one single block is low, and each of longitudinal force (Fx) and lateral force (Fy) more than a predetermined value is caused, the block falls and therefore the tire is lifted off the road surface. Consequently, a substantial ground contact area is reduced. Accordingly, there is a room for further improvement of the braking and driving performance and the cornering performance.

Accordingly, an object of the present invention is, in consideration of the problem described above, to provide a tire having a tread pattern in which blocks, each of which has a relatively small ground contact area, are densely arranged, the tire being capable of deriving on-ice performance sufficiently in a state in which braking force or driving force more than a predetermined value is caused.

Further, another object of the present invention is, in consideration of the problem described above, to provide a tire having a tread pattern in which blocks, each of which has a relatively small ground contact area, are densely arranged, the tire being capable of deriving braking and driving performance and cornering performance sufficiently in a state in which each of longitudinal direction force and lateral force more than a predetermined value is caused.

In the present invention, a tire is provided, as claimed in claim 1.

### [DELETED]

### [Brief Description of Drawings]

[Fig. 1] Fig. 1 is a front view of a part of a pneumatic tire 10 according to a first embodiment, which is not according to the present invention, but which is useful for understanding the present invention.
[Fig. 2] Fig. 2 is a plane developed view of a part of a tread surface of the pneumatic tire 10.
[Fig. 3] Fig. 3 is an enlarged view of a part of the tread surface of the pneumatic tire 10.
[Fig. 4] Fig. 4 is a cross-sectional view of a tread portion 15 taken along line F4-F4 shown in Fig. 3.
[Fig. 5] Fig. 5 is a cross-sectional view of the tread portion 15 taken along line F5-F5 shown in Fig. 3.
[Fig. 6] Fig. 6 is a plane developed view of a part of a tread surface of a pneumatic tire 10A according to a second embodiment.
[Fig. 7] Fig. 7 is a cross-sectional view of a tread portion 15A taken along line F7-F7 shown in Fig. 6.
[Figs. 8] Figs. 8A and 8B are views for describing functions of a block 100 of the pneumatic tire 10.
[Fig. 9] Fig. 9 is a plane developed view of a part of a tread surface of a pneumatic tire 10B according to another embodiment.

### [Description of Embodiments]

Hereinafter, embodiments will be described with reference to the drawings. Further, the same or similar reference numerals are assigned to the same or similar parts, and the description thereof is omitted as needed.

### First embodiment

### (1) Schematic configuration of whole of tire

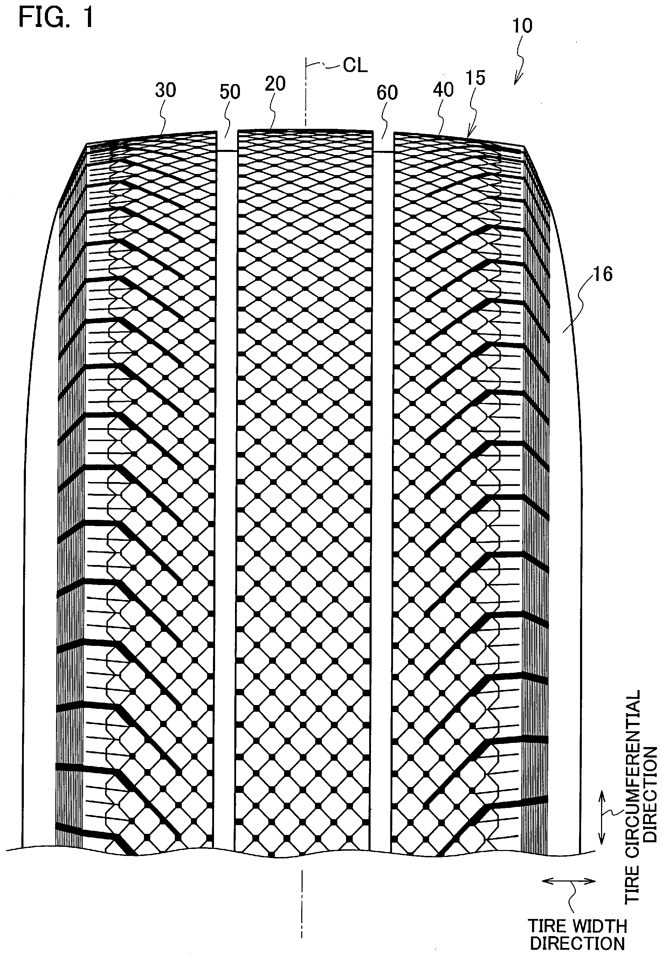

Fig. 1 is a front view of a part of a pneumatic tire 10 according to the present embodiment, which is not according to the present invention, but which is useful for understanding the present invention. The pneumatic tire 10 is formed as a tire for a passenger vehicle (including SUV and minivan) and is provided with a tread portion 15, a side wall 16, a bead portion (not shown), and the like, similar to a general tire.

The pneumatic tire 10 is formed as a so-called winter tire capable of travelling on an ice road surface and a snow road surface (ice and snow roads). The winter tire is called a studless tire. Further, the pneumatic tire 10 may be formed as an all season tire capable of travelling on both of non-ice and snow roads (wet road surface and dry road surface) and ice and snow roads. Or alternatively, the pneumatic tire 10 may be formed as a general summer tire, other than the winter tire and the all season tire.

A predetermined tread pattern is formed in the tread portion 15 of the pneumatic tire 10. As shown in Fig. 1, the tread portion 15 of the pneumatic tire 10 adopts a tread pattern in which many blocks, each of which has a relatively small size, are arranged adjacent to each other.

A block row 20, a block row 30, and a block row 40 are formed in the tread portion 15. Each of the block row 20, the block row 30, and the block row 40 is extended along a tire circumferential direction. A surface of each of the block rows (hereinafter, referred to as "wheel tread" as needed) is contacted with a road surface when the pneumatic tire 10 rolls.

The block row 20 is formed in a center region including a tire equatorial line CL. The block row 20 may be called a center block row.

The block row 30 and the block row 40 are formed at outer sides in a tire width direction of the block row 20, respectively. That is, the block row 30 and the block row 40 are formed in shoulder regions of the tread portion 15. Each of the block row 30 and the block row 40 may be called a shoulder block row.

A circumferential direction groove 50 is formed between the block row 20 and the block row 30. The circumferential direction groove 50 is extended in the tire circumferential direction so as to define the block row 20 and the block row 30.

Similarly, a circumferential direction groove 60 is formed between the block row 20 and the block row 40. The circumferential direction groove 60 is extended in the tire circumferential direction so as to define the block row 20 and the block row 40.

Here, each of the number of the block rows formed in the tread portion 15 and the number of the circumferential direction grooves formed in the tread portion 15 is not limited to that shown in Fig. 1.

### (2) Configuration of tread portion 15

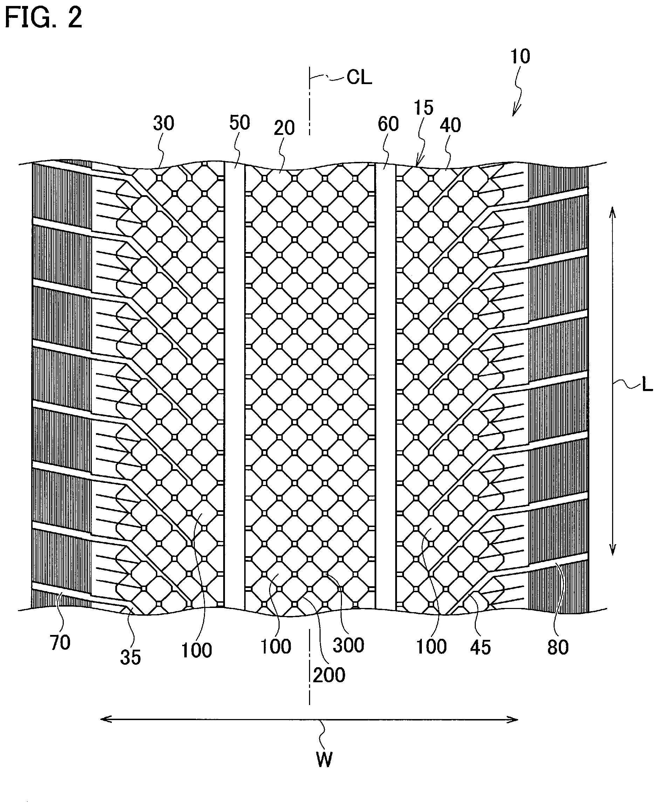

Next, a specific configuration of the tread portion 15 is described. Fig. 2 is a plane developed view of a part of a tread surface of the pneumatic tire 10. As shown in Fig. 2, the block row 20 is formed by many blocks 100 arranged adjacent to each other. Similarly, each of the block row 30 and the block row 40 is formed by many blocks 100 arranged adjacent to each other. That is, in the pneumatic tire 10, the blocks 100, each of which has a wheel tread contacted with a road surface, are arranged adjacent to each other in a tread surface view.

In the block row 20, four to five blocks 100 are arranged adjacent to each other in the tire width direction (including a block missing a part contacted with the circumferential direction groove 50 or the circumferential direction groove 60). In each of the block row 30 and the block row 40, three blocks 100 are arranged adjacent to each other in the tire width direction (including a block missing a part contacted with the circumferential direction groove 50 or the circumferential direction groove 60).

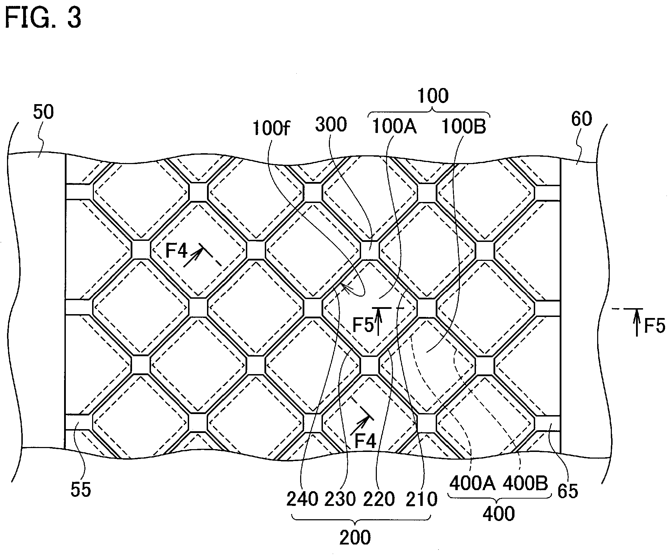

In the block row 20 having both ends in the tire width direction defined by the circumferential direction groove 50 and the circumferential direction groove 60, it is preferable that at least two blocks 100 are arranged adjacent to each other in the tire width direction or the tire circumferential direction via a sipe 200 (see Fig. 3) from a viewpoint of securing the rigidity of the block row 20. In a case in which two blocks 100 or more are arranged adjacent to each other, four blocks in diagonally longitudinal directions are contacted so as to support each other, and thereby sufficient rigidity can be secured.

A length along the tire circumferential direction of the block 100 is set in a range between 3.3% and 20.4% of a ground contact length L, when a normal load is applied, of the pneumatic tire 10 filled with air of normal internal pressure. Here, the length along the tire circumferential direction of the block 100 is preferably set in a range between 4.3% and 13.6% of the ground contact length L, and more preferably set in a range between 5.3% and 6.8% of the ground contact length L.

Further, a length along the tire width direction of the block 100 is set in a range between 2.8% and 35.2% of a ground contact width W, when a normal load is applied, of the pneumatic tire 10 filled with air of normal internal pressure. Here, the length along the tire width direction of the block 100 is preferably set in a range between 3.7% and 23.5% of the ground contact width W, and more preferably set in a range between 4.6% and 11.7% of the ground contact width W.

Here, the normal internal pressure denotes air pressure corresponding to the maximum load capacity in Year Book of JATMA (Japan Automobile Tyre Manufacturers Association) in Japan. The normal load denotes the maximum load capacity (maximum load) corresponding the maximum load capacity in Year Book of JATMA. Further, the ETRTO is applied in the Europe, the TRA is applied in U.S., and tire standard of each country is applied in other countries.

Further, a ground contact surface (ground contact area) denotes a part (area) of the tread contacted with the ground when the normal load is applied to the pneumatic tire filled with air of the normal internal pressure. The ground contact length L denotes a length in the tire circumferential direction of the tread contacted with the road surface, at a predetermined position in the tire width direction when the normal load is applied to the pneumatic tire filled with air of the normal internal pressure. The ground contact width W denotes a length in the tire width direction of the tread contacted with the road surface when the normal load is applied to the pneumatic tire filled with air of the normal internal pressure.

A circumferential edge 100f of the block 100 (not shown in Fig. 2, see Fig. 3) is defined against the adjacent block 100 by the sipe 200. In the present embodiment, the circumferential edge 100f of the block 100 denotes an edge (side wall) portion of the block 100 along an outer circumference of a rectangular shape in a tread surface view. However, in the present embodiment, the block 100 is formed in a substantially octagonal shape because each of apexes of the rectangular shape is cut by a hole groove 300 described below. Here, the circumferential edge 100f excludes a portion where the hole groove 300 is formed.

Further, the sipe denotes a groove closed by a side wall of the adjacent block 100 contacted with the groove when the tread portion 15 is contacted with the road surface. On the other hand, a portion using a name of a groove such as a circumferential direction groove and a lug groove denotes a groove not closed when the tread portion 15 is contacted with the road surface.

Further, a width of the sipe denotes a minimum distance between the side walls of the blocks adjacent to each other defined by the sipe. A width of the groove denotes a minimum distance between the side walls of the blocks (land portions contacted with the road surface) adjacent to each other defined by the groove.

The hole groove 300 is formed at a boundary of the blocks 100 adjacent to each other. Specifically, in the tread surface view, the hole groove 300 is formed in a communication region in which the sipe 200 along one side of the polygonal block 100 is communicated with the sipe along another side of the block 100 or one side of the adjacent block 100 adjacent to the block 100. The communication region includes a position in which the sipes 200 adjacent to each other are intersected. The communication region is formed by a part of the blocks 100 adjacent to each other.

In the present embodiment, the hole groove 300 is formed in a rectangular shape in the tread surface view and is extended in a tire radial direction. Specifically, the hole groove 300 is extended from the wheel tread toward an inner side in the tire radial direction.

A lug groove 70 is formed at an outer side in the tire width direction of the block row 30. Similarly, a lug groove 80 is formed at an outer side in the tire width direction of the block row 40. Each of the lug grooves 70, 80 is formed as a lateral groove extended in the tire width direction. A groove width of each of the lug grooves 70, 80 is smaller than a groove width of each of the circumferential direction grooves 50, 60. Here, each of the lug grooves 70, 80 is not necessarily parallel to the tire width direction as shown in Fig. 2 or the like, and therefore each of the lug grooves 70, 80 may be formed to be inclined within a range of ± 45 degrees against the tire width direction in the tread surface view.

Further, an inclined groove 35 is formed at an outer side (shoulder side) in the tire width direction of the block row 30. The inclined groove 35 is communicated with the lug groove 70. Similarly, an inclined groove 45 is formed at an outer side (shoulder side) in the tire width direction of the block row 40. A groove width of each of the inclined grooves 35, 45 is smaller than the groove width of each of the lug grooves 70, 80. Each of the inclined grooves 35, 45 is inclined at approximately 45 degrees against the tire equatorial line CL.

### (3) Configuration of block row

Next, a configuration of a block row, specifically the block row 20, formed in the tread portion 15 is further described.

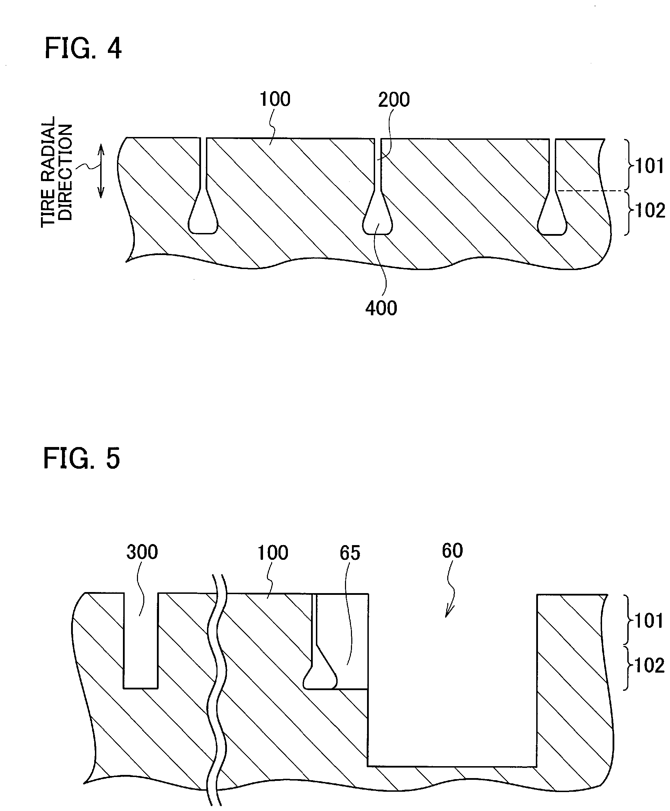

Fig. 3 is an enlarged view of a part of the tread surface of the pneumatic tire 10. Fig. 4 is a cross-sectional view of the tread portion 15 taken along line F4-F4 shown in Fig. 3. Fig. 5 is a cross-sectional view of the tread portion 15 taken along line F5-F5 shown in Fig. 3.

As described above, in the present embodiment, the block 100 is formed in a polygonal shape, specifically a rectangular shape. However, the apexes are cut by the hole grooves 300 and thereby the block 100 is substantially formed in an octagonal shape. The circumferential edge 100f of the block 100 is defined against the adjacent block 100 by the sipe 200. For example, a block 100A is defined against a block 100B (adjacent block) adjacent to the block 100A by the sipes 210 to 240 formed in the circumferential edge 100f of the block 100A. Further, as described above, the circumferential edge 100f excludes a portion where the hole groove 300 is formed.

In the block row 20, the blocks 100 are arranged to be adjacent to each other via the sipes 200. That is, in the circumferential edge 100f of a certain block 100 (for example, block 100A), the block 100 having the same shape and the same size as the block 100A is arranged. Here, at least one of the shapes and the sizes of the blocks 100 adjacent to each other are not necessarily the same, and therefore at least one of them may be different from each other. Further, such a configuration is similarly applied to each of the block row 30 and the block row 40.

The block 100 is formed in one piece in which a sipe and a groove are not formed. That is, the sipe or the groove that separates the block 100 is not formed in the block 100 in order to secure the rigidity of the block 100. Here, a fine hole groove or a short sipe terminated in the block 100 such as a so-called pinhole sipe, which hardly affects the rigidity of the block 100, may be formed in the block 100.

A size of the block is extremely small compared to that of a block arranged in a general tire. Specifically, in the tread surface view, an area of one single block is set in a range between 30 mm² and 200 mm². Further, the area is preferably set in a range between 40 mm² and 100 mm², and more preferably set in a range between 48 mm² and 81 mm². Further, in a tire for a passenger vehicle, the area is further preferably set in a range between 55 mm² and 70 mm².

The pneumatic tire 10 is described as an example of a tire for a passenger vehicle, while in a tire for a truck or a bus, the area of one single block is preferably set in a range between 45 mm² and 300 mm², and more preferably set in a range between 72 mm² and 162 mm². Further, in a large tire for a construction vehicle, the area of one single block is preferably set in a range between 600 mm² and 6,600 mm², and more preferably set in a range between 1,500 mm² and 2,700 mm².

Here, the area of one single block denotes an average area of all blocks 100 arranged in a predetermined region of the tread portion 15. Further, the predetermined region denotes a region of whole of the tread portion 15, or alternatively the ground contact surface when in the normal internal pressure and the normal load. Here, the block arranged adjacent to the circumferential direction groove 50, 60 and not formed in a rectangular shape is excluded.

The number of the rows of the blocks 100 per unit length in a width direction along the tire width direction is preferably set in a range between 0.10 rows/mm and 0.25 rows/mm, and more preferably set in a range between 0.15 rows/mm and 0.20 rows/mm. Further, the number of the rows of the blocks 100 per unit length in a circumferential direction along the tire circumferential direction is set in a range between 0.09 rows/mm and 0.22 rows/mm, and more preferably set in a range between 0.13 rows/mm and 0.18 rows/mm.

In a case in which the block 100 is formed in a rectangular shape, each side of the block 100 is inclined against the tire circumferential direction and the tire width direction in the tread surface view. For example, each side of the block 100A, in other words each of the sipes 200 (sipes 210 to 240), is not parallel to the tire circumferential direction and the tire width direction but inclined against the tire circumferential direction and the tire width direction. Specifically, each of the sipes 210 to 240 is inclined against the tire circumferential direction and the tire width direction at approximately 45 degrees.

A length of one side of the block 100 is set in a range between 2.7 mm and 24.6 mm. The length of the one side of the block 100 is preferably set in a range between 4.6 mm and 17.2 mm, and more preferably set in a range between 6.5 mm and 9.8 mm. Further, a length of the block 100 along the tire circumferential direction is preferably set in a range between 4.5 mm and 23.2 mm, and more preferably set in a range between 6.7 mm and 17.4 mm. Similarly, a length of the block 100 along the tire width direction is preferably set in a range between 4.5 mm and 23.2 mm, and more preferably set in a range between 6.7 mm and 17.4 mm.

Further, a corner portion of the block 100 may be formed in a round shape (tapered shape). A ratio (b/a) of a portion (b) of the round shape to the length (a) of one side of the block 100 described above is preferably set in a range between 11.25% and 33.75%, and more preferably set in a range between 18.0% and 27.0%.

Such rectangular blocks 100 are arranged adjacent to each other and the sipe 200 is inclined against the tire circumferential direction and the tire width direction. Accordingly, in the block row 20, the blocks 100 are arranged in a lattice-like state (grid-like state), specifically the blocks 100 are arranged in a lattice-like state to be inclined against the tire circumferential direction and the tire width direction.

Further, as described above, the block row 20 is defined by the circumferential direction grooves 50, 60. A lug thin groove 55 is communicated with the circumferential direction groove 50. Similarly, a lug thin groove 65 is communicated with the circumferential direction groove 60. Each of the lug thin groove 55 and the lug thin groove 65 is communicated with the sipe 200.

As shown in Fig. 4, an inner side groove 400 is formed at an inner side in the tire radial direction of the sipe 200. The inner side groove 400 is communicated with the sipe 200.

Further, the sipe 200 and the inner side groove 400 are not necessarily communicated with each other in the whole region in the tread surface view, and therefore the sipe 200 and the inner side groove 400 may be separated in a certain region by a connection portion such as a tie bar that connects the blocks adjacent to each other. That is, at least a part of the inner side groove 400 can be communicated with the sipe 200 to such an extent that draining performance is not deteriorated.

The inner side groove 400 is formed at an inner side in the tire radial direction with respect to the sipe 200 having a groove width (sipe width) smaller than that of the inner groove 400, and therefore the inner side groove 400 cannot be recognized easily in the tread surface view. Based on the characteristic of the inner side groove 400, the inner side groove 400 may be also called a tunnel groove or a hidden groove.

Further, as shown in Fig. 4, the block 100 includes a radial direction outer portion 101 and a radial direction inner portion 102. The radial direction outer portion 101 is formed at a side of the wheel tread. Further, the radial direction inner portion 102 is formed at an inner side in the tire radial direction with respect to the radial direction outer portion 101. A boundary between the radial direction outer portion 101 and the radial direction inner portion 102 is not especially limited, however it is preferable that the boundary is formed at a position of approximately half of a depth from the wheel tread to a bottom of the inner side groove 400, specifically when the depth from the wheel tread to the bottom of the inner side groove 400 is defined as 1.0, the boundary is preferably arranged in a region of 0.4 to 0.6.

As shown in Fig. 4, the sipe 200 is formed in the radial direction outer portion 101, and the inner side groove 400 is formed in the radial direction inner portion 102.

That is, in the radial direction outer portion 101, the circumferential edge 100f of the block 100 is defined against the block 100 (adjacent block) adjacent to the block by the sipe 200. In the radial direction inner portion 102, the circumferential edge 100f is defined against the adjacent block by the inner side groove 400.

Further, as shown by a dotted line in Fig. 3, for example, the inner side groove 400A formed at an inner side in the tire radial direction of the sipe 220 that defines the block 100A is communicated with the inner side groove 400B formed at an inner side in the tire radial direction of the sipe 200 that defines the block 100B (adjacent block) adjacent to the block 100A. That is, the inner side groove 400 is communicated with at least one of the inner grooves 400 formed at the inner side in the tire radial direction of the sipe 200 that defines the adjacent block.

The hole groove 300 is extended to the radial direction inner portion 102 toward the inner side in the tire radial direction. The hole groove 300 is communicated with the sipe 200 and the inner side groove 400. A depth of the hole groove 300 is substantially equal to a depth of the inner side groove 400.

Further, as shown in Fig. 3 and Fig. 5, the inner side groove 400 is communicated with the circumferential direction groove 60 via the lug thin groove 65. Similarly, the inner side groove 400 is communicated with the circumferential direction groove 50 via the lug thin groove 55.

The inner side groove 400 is formed such that a groove width of the inner side groove 400 becomes larger toward the inner side in the tire radial direction. As shown in Fig. 4, in the present embodiment, the inner side groove 400 is formed in a flask-like shape in which the groove width becomes asymptotically larger toward the inner side in the tire radial direction. That is, the groove width of the inner side groove 400 is larger than the width of the sipe 200. Here, a sectional shape along a direction of the groove width of the inner side groove 400 is not necessarily formed in a flask-like shape, and therefore the inner side groove 400 may be formed in a triangular shape, a trapezoidal shape, or a circular shape. In such a case, it is preferable that the groove width of the inner side groove 400 becomes larger toward the inner side in the tire radial direction. Further, the sipe 200 may be formed in a tapered shape such that a sipe width at a side of the wheel tread is made large.

### Second embodiment

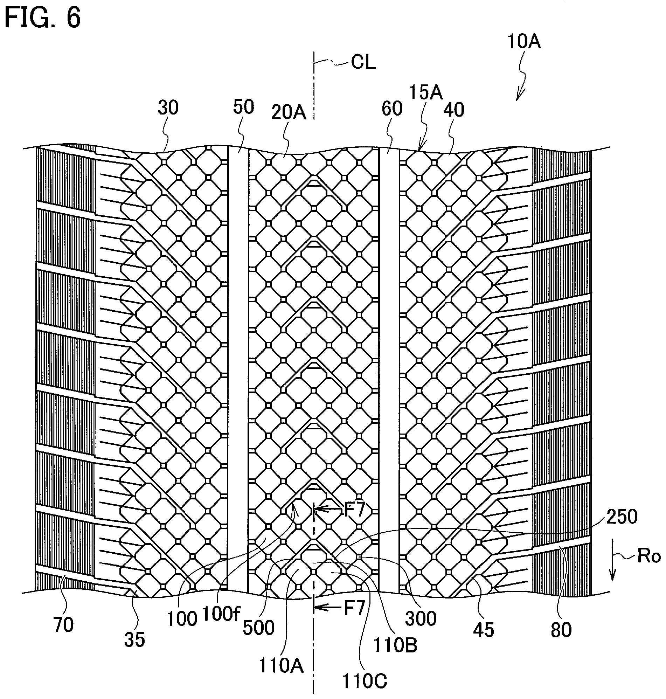

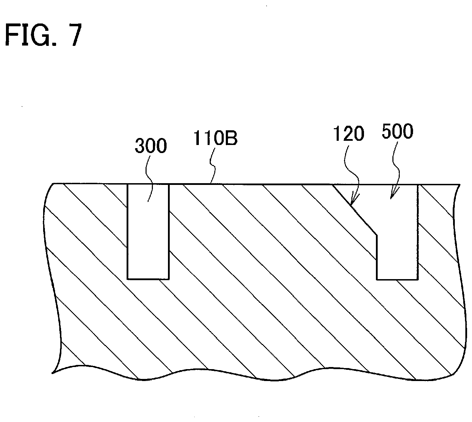

Fig. 6 is a plane developed view of a part of a tread surface of a pneumatic tire 10A according to the present embodiment. Further, Fig. 7 is a cross-sectional view of a tread portion 15A taken along line F7-F7 shown in Fig. 6. Hereinafter, portions different from those in the pneumatic tire 10 according to the first embodiment described above will be mainly described.

As shown in Fig. 6 and Fig. 7, in a block row 20A formed in the tread portion 15A of the pneumatic tire 10A, a leading groove portion 500 having a projection shape in a tread surface view, specifically a V-shape, is formed.

The leading groove portion 500 is formed adjacent to a block 100A, a block 100B, and a block 100C, each of which has a rectangular shape (however, a substantially octagonal shape due to the hole groove 300 as described above) similar to the block 100. The leading groove portions 500 are formed at a predetermined interval in the tire circumferential direction.

The leading groove portion 500 is formed by leading grooves 250 communicated with each other. The leading groove 250 is formed instead of the sipe 200 that defines the block 100. That is, in some blocks, specifically a block 110A to a block 110C (and a block adjacent to the blocks via the leading groove 250) among the blocks 100, a part of the circumferential edge 100f of the block 100 is defined by the leading groove 250 instead of the sipe 200 (and the inner side groove 400).

Here, the leading groove 250 has a groove width substantially same as that of the inner side groove 400. The leading groove 250 is communicated with the inner side groove 400 that defines the adjacent blocks 100.

The leading groove portion 500 is formed in a projection shape projected toward one side of the tire circumferential direction in the tread surface view. Specifically, the leading groove portion 500 is projected toward a direction opposite to a rotation direction Ro of the pneumatic tire 10A. That is, the rotation direction Ro of the pneumatic tire 10A when mounted to a vehicle is designated.

An inclined portion 120 inclined toward an inner side in the tire radial direction in the one side (the direction opposite to the rotation direction Ro) of the tire circumferential direction is formed in the wheel tread of the block 110B corresponding to a projection of the leading groove portion 500. The inclined portion 120 is inclined toward the one side of the tire circumferential direction.

A ratio (S2/S1) of an area (S2) of the wheel tread of the block 110B having the inclined portion 120 to an area (S1) of the block 100 not having the inclined portion 120 is set in a range between 45% and 85%. Here, the ratio is preferably set in a range between 55% and 75%, and more preferably set in a range between 60% and 70%.

### Functions and effects

Next, functions and effects of the pneumatic tires 10, 10A described above are described. Table 1 shows a result of an evaluation test including a result of the pneumatic tires 10, 10A.

**Table 1**

| | | Conventional example | Comparative example | Example 1 | Example 2 | Example 3 |
|---|---|---|---|---|---|---|
| Evaluation items | Braking (- 2°C) | 101.6 | 100 | 110.1 | 110.3 | 110 |
| | Braking (- 5°C) | 100.3 | 100 | 112.9 | 109.8 | 112 |
| | Acceleration (- 2°C) | 102.9 | 100 | 106.6 | 107.5 | 102 |
| | Acceleration (- 5°C) | 98.2 | 100 | 103.9 | 103.3 | 102 |
| | Feeling | 7- | 6.5 | 7 | 7+ | N. A. |

A size of the tire and the vehicle used for the evaluation test are as described below.

Tire size: 195/65R15
Vehicle: Toyota Prius

In the evaluation test, braking performance and acceleration performance on ice road surfaces having different road surface temperatures were evaluated. The braking performance was evaluated by measuring a stopping distance from a predetermined speed. The acceleration performance was evaluated by measuring an arrival time to a predetermined speed from a stopped state. Each value is indexed by dividing each value according to the conventional example and the examples by the value according to the conventional example defined as 100.

"Feeling" is defined based on total evaluation of feelings relating to controllability and stability of each tire of a test driver. As the value is larger, the feeling is superior.

"Conventional example" corresponds to a general studless tire widely available in a market, the tire having many sipes formed in a block. "Comparative example" corresponds to a tire having a tread pattern disclosed in Japanese Unexamined Patent Application Publication No. 2014-104768 or the like.

"Example 1" corresponds to a tire having a tread pattern as same as that of the pneumatic tire 10. "Example 2" corresponds to a tire having a tread pattern as same as that of the pneumatic tire 10A. "Example 3" corresponds to a tire having a tread pattern removing the hole groove 300 from the tread pattern of the pneumatic tire 10.

As shown in Table 1, in each of the examples 1 to 3, the braking performance and the acceleration performance are improved. Especially, the improvement of the braking performance is remarkable. Further, in each of the example 1 and the example 2, the acceleration performance is largely improved compared to that in the conventional example.

Table 2 shows a measurement result of a change of the ground contact area in braking and accelerating (deceleration G or acceleration G of 0.2G is caused) as the ground contact area in stopping of the vehicle is defined as 1.0.

**Table 2**

| | Comparative example | Example 2 |
|---|---|---|
| Stopping | 1.000 | 1.000 |
| Braking | 0.953 | 0.985 |
| Accelerating | 1.692 | 1.849 |

As shown in Table 2, in the example 2 (pneumatic tire 10A), a decrease of the ground contact area in braking is suppressed, and an increase of the ground contact area in accelerating is remarkable. That is, in the example 2, lifting off of the block 100 from the road surface due to the falling of the block 100 in braking and accelerating is effectively suppressed.

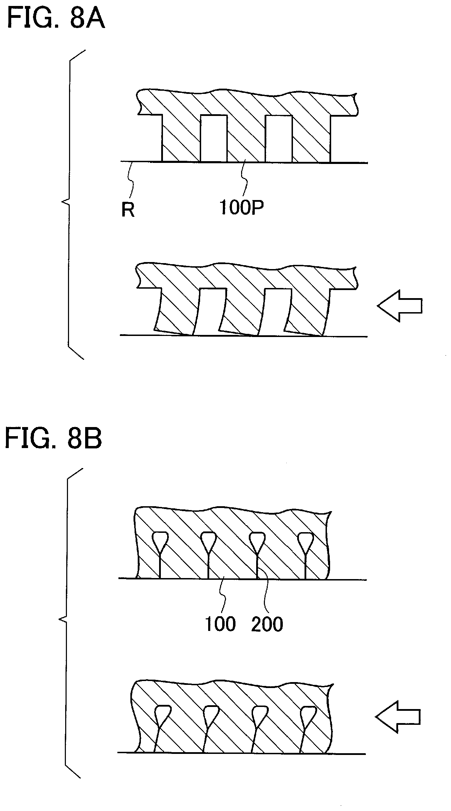

Figs. 8A and 8B are views for describing functions of the block 100 of the pneumatic tire 10 described above. Fig. 8A shows a state of deformation in braking of the block of the tire according to the comparative example. Fig. 8B shows a state of deformation in braking of the block 100 of the pneumatic tire 10 according to the example.

As shown in Fig. 8A, in the comparative example, the thin groove is formed instead of the sipe between the blocks 100P adjacent to each other, and therefore the blocks adjacent to each other cannot support each other. Consequently, when the longitudinal force is input in braking along a direction of an arrow shown in the figure, the block falls and therefore the block is easily lifted off the road surface R.

On the other hand, as shown in Fig. 8B, in the example, the circumferential edge of the block 100 is defined by the sipe 200, and therefore the blocks 100 adjacent to each other can support each other in braking. Consequently, the falling of the block can be suppressed. With this, the block 100 is hardly lifted off the road surface R, and therefore the ground contact area in braking is secured easily. Further, as shown in Table 2, such a function is similarly caused in accelerating.

Further, according to the example, since the ground contact area in braking and accelerating is secured easily, the braking performance and the acceleration performance not only on the ice road surface but also on the dry road surface can be improved. Further, the configuration in which the blocks adjacent to each other support each other as shown in the example suppresses the falling of the block 100 when the lateral force is input, and thereby the cornering performance and steering stability can be improved.

As described above, according to the pneumatic tire 10, the circumferential edge 100f of the block 100 is defined against the adjacent block 100 by the sipe 200 and the inner side groove 400. Further, the inner side groove 400 is formed at the inner side in the tire radial direction of the sipe 200. The inner side groove 400 is communicated with the sipe 200.

Accordingly, as described above, since the blocks 100 adjacent to each other can support each other, the falling of the block 100 is suppressed, and as a result, the ground contact area in braking or the like is secured easily. More specifically, an increase of the ground contact area in braking and accelerating can be derived while maintaining an advantage, which derives an increase of the ground contact length L, of the block 100 having a relatively small size.

Further, since the inner side groove 400 is communicated with the sipe 200 at the inner side in the tire radial direction, the water screen (water) is quickly guided from the wheel tread of the block 100 to the sipe 200 and the inner side groove 400 in the block row in which the blocks 100 are arranged adjacent to each other, and thereby the water screen can be removed effectively.

More specifically, even if the sipe 200 is closed on the wheel tread when the block 100 is contacted with the road surface, the water screen is sucked easily into the inner side groove 400 and thereby the water screen that causes the decrease of µ is removed easily on the ice road surface.

Accordingly, in a case in which the tread pattern in which blocks 100, each of which has a relatively small ground contact area, are densely arranged, the on-ice performance can be derived sufficiently even in a state in which the braking force or the driving force more than a predetermined value is caused.

Further, since many sipes 200 are formed in the block row, especially on the snow-covered road surface (a road surface covered with pressed snow), an edge effect that scratches the road surface can be derived sufficiently. Accordingly, the required performance not only on the ice road surface but also on the snow-covered road surface can be secured sufficiently compared to the conventional example and the comparative example.

Further, since the falling of the block 100 is suppressed, the crack of the block 100 is also suppressed, and therefore the performance can be maintained for a long period of time.

In the present embodiment, the block 100 is formed in a polygonal shape and the hole groove 300 communicated with the inner side groove 400 is formed in the communication region of the sipes adjacent to each other. Accordingly, the water screen is further guided easily to the inner side groove 400 formed at the inner side in the tire radial direction via the hole groove 300. With this, the on-ice performance can be further improved. Further, since the inner side groove 400 is communicated with the circumferential direction grooves 50, 60, the water screen formed between the block row 20 and the road surface can be removed quickly.

Further, such an effect can be similarly derived not only on the ice road surface but also on the wet road surface.

Further, a blade formed in a vulcanizing molding mold for molding the block rows 20 or the like is formed for molding many blocks densely, each of which has a small size, and therefore the blade is apt to be complicated in shape and durability of the blade might be difficult to be secured. However, the hole groove 300 is formed at a portion where the sipes 200 crosses each other, and thereby the portion of the blade for molding the hole groove 300 is served as a reinforcing element for a whole of the blade. Accordingly, it is preferable to form the hole groove 300 at the portion where the sipes 200 crosses each other, from a viewpoint of securing the durability of the blade (vulcanizing molding mold).

In the present embodiment, the inner side groove 400 is formed in a flask-like shape in which the groove width of the inner side groove 400 becomes asymptotically larger toward the inner side in the tire radial direction. With this, the water screen entered into the sipe 200 is sucked easily and smoothly as a laminar flow into the inner side groove 400 in which the groove width is asymptotically increased. Further, the rigidity of the block 100 is gradually increased toward the outer side in the tire radial direction due to the shape of the inner side groove 400 formed in a flask-like shape, and thereby a rigidity step in the tire radial direction can be decreased.

Further, since the inner side groove 400 is formed in a flask-like shape, the blade for molding the inner side groove 400 is released easily with less resistance when the blade is pulled out from the vulcanized tread portion 15.

In the present embodiment, each side of the block 100 is inclined against the tire circumferential direction and the tire width direction. Accordingly, the block row 20 has the rigidity more than a predetermined value not only in a specific direction but also in all directions. With this, the ground contact area is secured, and thereby the braking performance and the acceleration performance are further derived.

Further, draining to the circumferential direction grooves 50, 60 formed at the outer side in the tire width direction of the block row 20 is not interrupted. Accordingly, the performance on the ice road surface and the wet road surface can be further improved by the improvement of the draining performance.

In the present embodiment, at least three blocks 100 are arranged adjacent to each other in the tire width direction in the block row 20. Accordingly, even in the block row 20 in which the blocks 100, each of which has a small size, are densely arranged, required rigidity can be secured.

In the present embodiment, the block 100 is formed in one piece in which a sipe and a groove are not formed. In the tread pattern widely used conventionally in which a sipe or a groove is formed in the block, when the water absorbing performance, the draining performance and the edge effect are pursued, the rigidity of the block is deteriorated, and therefore a trade-off relation is generated.

Since the sipe or the groove is not formed at all in each of the blocks 100, further deterioration of the rigidity of the block 100 is avoided. Further, since the blocks 100 are formed to support each other when contacting with the ground, even if the size of the block 100 is made small, the substantial rigidity of the block 100 is not deteriorated.

Further, the leading groove portion 500 is formed in the pneumatic tire 10A. The leading groove portion 500 is formed in a projection shape projected toward one side of the tire circumferential direction, specifically projected toward a direction opposite to the rotation direction Ro. Further, the inclined portion 120 is formed in the wheel tread of the block 110A corresponding to the projection of the leading groove portion 500.

Accordingly, the water screen is guided into the inner side groove 400 quickly and smoothly via the leading groove portion 500. With this, the performance on the ice road surface and the wet road surface can be further improved by the improvement of the draining performance. Further, the leading groove portion 500 is formed in a V-shape in the tread surface view, while a normal groove formed in a V-shape is projected toward the rotation direction Ro which is an opposite direction contrary to the leading groove portion 500. Further, since the block 110A includes the inclined portion 120 and the leading groove portion 500 is formed to be orthogonal to either of the sipe 200 and the inner side groove 400, the water screen can be guided to the inner side groove 400 further effectively.

### Other embodiments

As described above, the contents of the present invention are described with reference to the examples, however the present invention is not limited to those descriptions. It is obvious for a person skilled in the art to adopt various modifications and improvement.

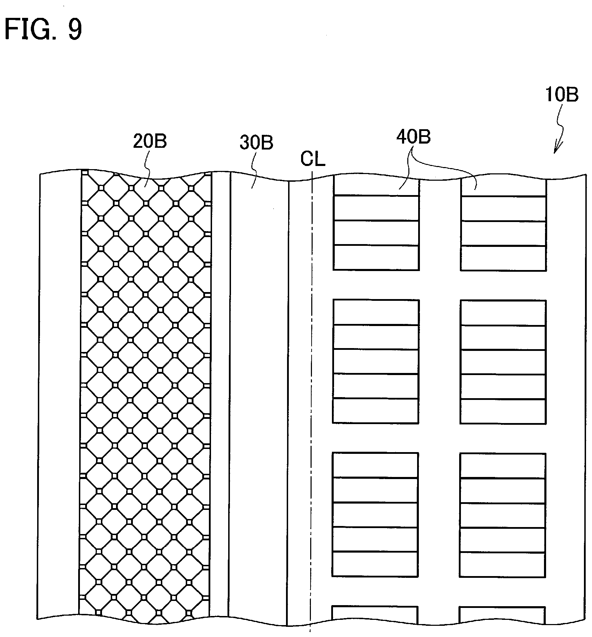

For example, contrary to the pneumatic tire 10 described above, the blocks 100 may not be densely arranged across the whole of the tread portion 15. Fig. 9 is a plane developed view of a part of a tread surface of a pneumatic tire 10B according to another embodiment, which is not according to the present invention, but which is useful for understanding the present invention.

As shown in Fig. 9, a block row 20B in which the blocks 100 are densely arranged may be formed in a part of a tread portion 15B in the tire width direction. That is, the tread portion 15B may include a block row 30B formed in a rib-like shape extended in the tire circumferential direction or a block row 40B formed by a block having a size larger than that of the block 100 and formed in a rectangular shape in the tread surface view. Further, the block row combined with the block row 20B may be change as needed in accordance with performance required in the pneumatic tire 10B.

Further, in the embodiments described above, the block 100 is formed in a rectangular shape (substantially, octagonal shape) in the tread surface view, however the block 100 may be formed in a polygonal shape such as a triangular shape and a hexagonal shape. Further, the block 100 may be formed in a substantially oval shape or a shape close to a circular shape by chamfering a corner portion of the circumferential edge 100f of the block 100 or by rounding the corner portion to be a round shape (tapered shape).

In the embodiments described above, the hole groove 300 is formed, however the hole groove 300 is not necessarily formed. Further, the hole groove 300 is not necessarily formed in a rectangular shape in the tread surface view. However, it is preferable that the hole groove 300 is formed such that the corner portion of the circumferential edge 100f of the block 100 is not formed in a sharp angle from a viewpoint of securing the rigidity or the durability of the block 100.

In the embodiments described above, the sipes 200, specifically the sipes 210 to 240, are inclined at approximately 45 degrees against the tire circumferential direction and the tire width direction in the tread surface view, however an extending direction of the sipe 200 is not limited to the direction inclined at such an angle. For example, each of the sipes 210, 230 may be extended to be close to the tire circumferential direction and each of the sipes 220, 240 may be extended to be close to the tire width direction.

Further, in the embodiments described above, the sipe 200 is formed to the wheel tread of the tread portion 15, however a groove having a groove width (sipe width) larger than that of the sipe 200 may be formed at a side of the wheel tread. The sipe is closed in the ground contact surface, while the groove is not closed in the ground contact surface. However, the groove can derive a similar function to the sipe as long as the blocks adjacent to each other can support each other when large external force is input and a part of the groove is closed due to the contact of the adjacent blocks, and further since the sipe is formed at the inner side in the tire radial direction, the adjacent blocks can support each other. That is, a groove having a groove width (sipe width) larger than that of the sipe 200 may be formed at a side of the wheel tread of the sipe 200 as long as the sipe 200 is formed such that the blocks 100 can support each other and is formed in the radial direction outer side portion 101.

Further, in the embodiments described above, the sipe 200 and the inner side groove 400 are communicated with each other, however as described above, the sipe 200 and the inner side groove 400 are not necessarily communicated with each other in the whole region in the tread surface view, and therefore the sipe 200 and the inner side groove 400 may be separated in a certain region by the connection portion such as a tie bar that connects the blocks 100 adjacent to each other. Or alternatively, a groove having a different shape from the sipe 200 or the inner side groove 400 may be formed between the sipe 200 and the inner side groove 400.

Further, the inner side groove 400 is not necessarily formed, and therefore the sipe 200 may be formed to the radial direction inner portion 102 instead of the inner side groove 400.

As described above, the embodiments of the present invention are described, however the present invention is not limited to the description and the drawings forming a part of the present disclosure. Various modifications, examples, and operation techniques will be apparent from the present disclosure to a person skilled in the art within the scope of the present invention as defined by the appended claims.

### [DELETED]

### [Industrial Applicability]

According to the tire described above, in the configuration having the tread pattern in which the blocks, each of which has a relatively small ground contact area, are densely arranged, the on-ice performance can be derived sufficiently in a state in which the braking force or the driving force more than a predetermined value is caused.

### [Reference Signs List]

10, 10A, 10B: pneumatic tire
15, 15A, 15B: tread portion
16: side wall
20, 20A, 20B, 30, 30B, 40, 40B: block row
35, 45: inclined groove
50, 60: circumferential direction groove
55, 65: lug thin groove
70, 80: lug groove
100, 100A, 100B, 100P, 110A, 110B, 110C: block
100f: circumferential edge
101: radial direction outer portion
102: radial direction inner portion
120: inclined portion
200, 210, 220, 230, 240: sipe
250: leading groove
300: hole groove
400, 400A, 400B: inner side groove
500: leading groove portion

## Claims

1. A tire comprising a block row (20A) formed in a center region including a tire equatorial line (CL) having blocks (100, 110A, 110B, 110C), each of which has a tread (15A) contacted with a road surface, arranged adjacent to each other in a tire width direction and a tire circumferential direction in a tread surface view,
wherein:
each of the blocks (100, 110A, 110B, 110C) includes a radial direction outer portion (101) formed at a side of the tread, and a radial direction inner portion (102) formed at an inner side in a tire radial direction of the radial direction outer portion (101);
**characterized in that**:
an entire circumferential edge (100f) of the blocks except the blocks arranged in width direction edge of the block row (20A) is defined against an adjacent block adjacent to the block by a sipe (200) in the radial direction outer portion;
an inner side groove (400) is formed at an inner side in the tire radial direction of the sipe;
at least a part of the inner side groove (400) is communicated with the sipe (200); and
the entire circumferential edge (100f) is defined against the adjacent block by the inner side groove (400) in the radial direction inner portion, wherein:
a part of the circumferential edge (100f) is defined by a leading groove (250) instead of the sipe (200) in a certain block among the blocks (100, 110A, 110B, 110C);
a leading groove portion (500) is formed by the leading grooves (250) communicated with each other; and
the leading groove portion (500) is formed in a projection shape projected toward one side of a tire circumferential direction.

2. The tire according to claim 1, wherein the inner side groove (400) is communicated with at least either of other inner side grooves (400) formed at the inner side in the tire radial direction of the sipe (200) that defines the adjacent block.

3. The tire according to claim 1, wherein, in the tread surface view:
the block (100, 110A, 110B, 110C) is formed in a polygonal shape; and
a hole groove (300) extended in the tire radial direction and communicated with the inner side groove (400) is formed in a communication region in which the sipe (200) along one side of the block is communicated with the sipe (200) along either of other sides of the block or one side of the adjacent block.

4. The tire according to claim 1, further comprising a circumferential direction groove (50, 60) that defines the block rows (20A) in which the blocks (100, 110A, 110B, 110C) are arranged adjacent to each other, the circumferential direction groove (50, 60) extending in the tire circumferential direction,
wherein the inner side groove (400) is communicated with the circumferential direction groove (50, 60).

5. The tire according to claim 1, wherein the inner side groove is formed such that a groove width of the inner side groove becomes larger toward the inner side in the tire radial direction.

6. The tire according to claim 1, wherein an area of one single block is set in a range between 30 mm² and 200 mm² in the tread surface view.

7. The tire according to claim 1, wherein, in the tread surface view:
the block (100, 110A, 110B, 110C) is formed in a rectangular shape; and
each side of the block (100, 110A, 110B, 110C) is inclined against a tire circumferential direction and the tire width direction.

8. The tire according to claim 4, wherein at least three blocks are arranged adjacent to each other in a tire width direction in the block row.

9. The tire according to claim 1, wherein, in each block (100, 110A, 110C), a sipe and a groove are not formed, so that each of the blocks is formed in one piece.

10. The tire according to claim 1, wherein the leading groove (250) has a groove width substantially the same as that of the inner side groove (400) and the leading groove (250) is communicated with the inner side groove (400) that defines adjacent blocks (100).

11. The tire according to claim 1, wherein an inclined portion (120) inclined toward an inner side in the tire radial direction toward one side of a tire circumferential direction is formed in the tread (15) of the block (110B) corresponding to a projection of the leading groove portion (500).

## Patentansprüche

1. Reifen, umfassend eine Blockreihe (20A), die in einem Mittelbereich, der eine Reifenäquatorlinie (CL) einschließt, geformt ist, wobei sie Blöcke (100, 110A, 110B, 110C) aufweist, von denen jeder eine in Berührung mit einer Straßenoberfläche gebrachte Lauffläche (15A) aufweist, die in einer Laufflächenansicht zueinander benachbart in einer Reifenbreitenrichtung und einer Reifenumfangsrichtung angeordnet sind,
wobei:
jeder der Blöcke (100, 110A, 110B, 110C) einen in Radialrichtung äußeren Abschnitt (101), der an einer Seite der Lauffläche geformt ist, und einen in Radialrichtung inneren Abschnitt (102), der an einer in einer Reifenradialrichtung inneren Seite des in Radialrichtung äußeren Abschnitts (101) geformt ist, einschließt,
**dadurch gekennzeichnet, dass**:
eine gesamte umlaufende Kante (100f) der Blöcke mit Ausnahme der Blöcke, die in einer Breitenrichtungskante der Blockreihe (20A) angeordnet sind, gegenüber einem benachbarten Block, der zu dem Block benachbart ist, durch eine Lamelle (200) in dem in Radialrichtung äußeren Abschnitt definiert wird,
eine Innenseitenrille (400) an einer in der Reifenradialrichtung inneren Seite der Lamelle geformt ist,
mindestens ein Teil der Innenseitenrille (400) mit der Lamelle (200) verbunden ist und
die gesamte umlaufende Kante (100f) gegenüber dem benachbarten Block durch die Innenseitenrille (400) in dem in Radialrichtung inneren Abschnitt definiert wird, wobei:
ein Teil der umlaufenden Kante (100f) durch eine vordere Rille (250) anstelle der Lamelle (200) in einem bestimmten Block unter den Blöcken (100, 110A, 110B, 110C) definiert wird,
ein vorderer Rillenabschnitt (500) durch die vorderen Rillen (250) gebildet wird, die miteinander verbunden sind, und
der vordere Rillenabschnitt (500) in einer Vorsprungsgestalt geformt ist, die hin zu einer Seite einer Reifenumfangsrichtung vorspringt.

2. Reifen nach Anspruch 1, wobei die Innenseitenrille (400) mit mindestens einer von anderen Innenseitenrillen (400) verbunden ist, die an der in der Reifenradialrichtung inneren Seite der Lamelle (200) geformt sind, die den benachbarten Block definiert.

3. Reifen nach Anspruch 1, wobei, in der Laufflächenansicht,
der Block (100, 110A, 110B, 110C) in einer vieleckigen Gestalt geformt ist und eine Lochrille (300), die sich in der Reifenradialrichtung erstreckt und mit der Innenseitenrille (400) verbunden ist, in einem Verbindungsbereich geformt ist, in dem die Lamelle (200) entlang einer Seite des Blocks mit der Lamelle (200) entlang einer von anderen Seiten des Blocks oder einer Seite des benachbarten Blocks verbunden ist.

4. Reifen nach Anspruch 1, der ferner eine Umfangsrichtungsrille (50, 60) umfasst, welche die Blockreihen (20A) definiert, in denen die Blöcke (100, 110A, 110B, 110C) zueinander benachbart angeordnet sind, wobei sich die Umfangsrichtungsrille (50, 60) in der Reifenumfangsrichtung erstreckt,
wobei die Innenseitenrille (400) mit der Umfangsrichtungsrille (50, 60) verbunden ist.

5. Reifen nach Anspruch 1, wobei die Innenseitenrille derart geformt ist, dass eine Rillenbreite der Innenseitenrille hin zu der in der Reifenradialrichtung inneren Seite größer wird.

6. Reifen nach Anspruch 1, wobei eine Fläche eines einzelnen Blocks in einem Bereich zwischen 30 mm² und 200 mm² in der Laufflächenansicht festgesetzt ist.

7. Reifen nach Anspruch 1, wobei, in der Laufflächenansicht,
der Block (100, 110A, 110B, 110C) in einer rechteckigen Gestalt geformt ist und jede Seite des Blocks (100, 110A, 110B, 110C) gegen eine Reifenumfangsrichtung und die Reifenbreitenrichtung geneigt ist.

8. Reifen nach Anspruch 4, wobei mindestens drei Blöcke zueinander benachbart in einer Reifenbreitenrichtung in der Blockreihe angeordnet sind.

9. Reifen nach Anspruch 1, wobei, in jedem Block (100, 110A, 110C), eine Lamelle und eine Rille nicht geformt sind, so dass jeder der Blöcke in einem Stück geformt ist.

10. Reifen nach Anspruch 1, wobei die vordere Rille (250) eine Rollenbreite aufweist, die im Wesentlichen die gleiche ist wie diejenige der Innenseitenrille (400), und die vordere Rille (250) mit der Innenseitenrille (400) verbunden ist, die benachbarte Blöcke (100) definiert.

11. Reifen nach Anspruch 1, wobei ein geneigter Abschnitt (120), der hin zu einer in der Reifenradialrichtung inneren Seite hin zu einer Seite einer Reifenumfangsrichtung geneigt ist, in der Lauffläche (15) des Blocks (110B) geformt ist, der einem Vorsprung des vorderen Rillenabschnitts (500) entspricht.

## Revendications

1. Bandage pneumatique, comprenant une rangée de pavés (20A) formée dans une région centrale incluant une ligne équatoriale du bandage pneumatique (CL) comportant des pavés (100, 110A, 110B,110C), dont chacun comporte une bande de roulement (15A) entrant en contact avec la surface d'une route, agencés de manière adjacente les uns aux autres dans une direction de la largeur du bandage pneumatique, et dans une direction circonférentielle du bandage pneumatique dans une vue de la bande de roulement ;
dans lequel :
chacun des pavés (100, 110A, 110B, 110C) inclut une partie externe dans la direction radiale (101) formée au niveau d'un côté interne, et une partie interne dans la direction radiale (102) formée dans une direction radiale du bandage pneumatique, de la partie externe dans la direction radiale (101) ;
**caractérisé en ce que** :
un bord circonférentiel entier (100f) des pavés, à l'exception des pavés agencés dans un bord dans la direction de la largeur de la rangée de pavés (20a), est défini contre un pavé adjacent, adjacent au pavé, par une lamelle (200) dans la partie externe dans la direction radiale ;
une rainure latérale interne (400) est formée au niveau d'un côté interne, dans la direction radiale du bandage pneumatique, de la lamelle ;
au moins une partie de la rainure latérale interne (400) est mise en communication avec la lamelle (200) ; et
le bord circonférentiel entier (100f) est défini contre le pavé adjacent par le rainure latérale interne (400), dans la direction radiale de la partie interne ; dans lequel :
une partie du bord circonférentiel (100f) est définie par une rainure avant (250), au lieu de la lamelle (200), dans un pavé défini parmi les pavés (100, 110A, 110B, 110C) ;
une partie de rainure avant (500) est formée par les rainures avant (250), en communication les unes avec les autres ; et
la partie de rainure avant (500) est formée en une forme en saillie, débordant vers un côté d'une direction circonférentielle du bandage pneumatique.

2. Bandage pneumatique selon la revendication 1, dans lequel la rainure latérale interne (400) est mise en communication avec au moins une des autres rainures latérales internes (400) formées au niveau du côté interne, dans la direction radiale du bandage pneumatique, de la lamelle (200) qui définit le pavé adjacent.

3. Bandage pneumatique selon la revendication 1, dans lequel, dans la vue de la surface de la bande de roulement :
le pavé (100, 110A, 110B, 110C) est formé en une forme polygonale ; et
une rainure à trou (300) s'étendant dans la direction radiale du bandage pneumatique et mise en communication avec la rainure latérale interne (400) est formée dans une région de communication dans laquelle la lamelle (200), le long d'un côté du pavé, est mise en communication avec la lamelle (200) le long de chacun de l'un des autres côtés du pavé ou un côté du pavé adjacent.

4. Bandage pneumatique selon la revendication 1, comprenant en outre une rainure dans la direction circonférentielle (50, 60) qui définit les rangées de pavés (20A) dans lesquelles les pavés (100, 110A, 110B, 110C) sont agencés de manière adjacente les unes aux autres, la rainure dans la direction circonférentielle (50, 60) s'étendant dans la direction circonférentielle du bandage pneumatique ;
dans lequel la rainure latérale interne (400) est mise en communication avec la rainure dans la direction circonférentielle (50, 60).

5. Bandage pneumatique selon la revendication 1, dans lequel la rainure latérale interne est formée de sorte qu'une largeur de rainure de la rainure latérale interne est accrue vers le côté interne, dans la direction radiale du bandage pneumatique.

6. Bandage neumatique selon la revendication 1, dans lequel une surface d'un seul pavé est ajustée dans un intervalle compris entre 30 mm² et 200 mm², dans la vue de la surface de la bande de roulement.

7. Bandage pneumatique selon la revendication 1, dans lequel, dans la vue de la surface de la bande de roulement :
le pavé (100, 110A, 110B, 110C) est formé en une forme rectangulaire ; et
chaque côté du pavé (100, 110A, 110B, 110C) est incliné contre une direction circonférentielle du bandage pneumatique et la direction de la largeur du bandage pneumatique.

8. Bandage pneumatique selon la revendication 4, dans lequel au moins trois pavés sont agencés de manière adjacente les uns aux autres, dans une direction de la largeur du bandage pneumatique, dans la rangée de pavés.

9. Bandage pneumatique selon la revendication 1, dans lequel, dans chaque pavé (100, 110A, 110B, 110C), une lamelle et une rainure ne sont pas formées, de sorte que chacun des pavés est formé d'une seule pièce.

10. Bandage pneumatique selon la revendication 1, dans lequel la rainure avant (250) a une largeur de rainure sensiblement identique à celle de la rainure du côté interne (400), et la rainure avant (250) est mise en communication ave la rainure du côté interne (400) qui définit les pavés adjacents (100).

11. Bandage pneumatique selon la revendication 1, dans lequel une partie inclinée (120), inclinée vers un côté interne dans la direction radiale du bandage pneumatique, vers un côté d'une direction circonférentielle du bandage pneumatique, est formée dans la bande de roulement (15) du pavé (110B) correspondant à une saillie de la partie de rainure avant (500).
